# EUROPÄISCHE PATENTSCHRIFT

(11) **EP 1 167 140 B1**
(45) Veröffentlichungstag und Bekanntmachung des Hinweises auf die Patenterteilung: **14.12.2005**
(21) Anmeldenummer: 01113670.2
(22) Anmeldetag: 19.06.2001
(51) Int. Cl.: B60T 1/06, F16D 55/36

(54) **Radantrieb mit integrierter, dynamischer Betriebsbremse**
Wheel drive with integrated dynamic service brake
Entrainement de roue à frein de service dynamique intégré

(30) Priorität: 22.06.2000 DE 10030441
(43) Veröffentlichungstag der Anmeldung: 02.01.2002
(73) Patentinhaber: LOHMANN & STOLTERFOHT GMBH, 58455 Witten (DE)
(72) Erfinder: Damm, Horst, 45549 Sprockhövel (DE); Dornhege, Wolfgang, 44532 Lünen (DE)
(74) Vertreter: Maiwald Patentanwalts GmbH

(56) Entgegenhaltungen:
- DE-U- 29 910 017
- US-A- 4 496 017
- US-A- 4 562 903

## Beschreibung

Die Erfindung betrifft einen Radantrieb, insbesondere für fahrbare Arbeitsmaschinen, mit einer integrierten dynamischen Betriebsbremse gemäß dem Oberbegriff des Anspruchs 1.

Fahrbare Arbeitsmaschinen - wie Gabelstapler, Forstmaschinen, Landmaschinen, etc. - werden gewöhnlich mit Fahrgeschwindigkeiten bis zu 40 km/h bewegt. Bei derartigen Arbeitsmaschinen ist ein hohes Maß an Wendigkeit gefordert. Aus diesen Gründen haben sich für fahrbare Arbeitsmaschinen direkte Radantriebe gegenüber einem Zentralantrieb, bei dem eine Weiterleitung der Antriebskraft an ein Radpaar stattfindet, durchgesetzt. Da die fahrbaren Arbeitsmaschinen der hier interessierenden Art bereits über einen Hydraulikkreislauf verfügen, um ihre Arbeitsausrüstung zu bewegen, wird beim Radantrieb vorzugsweise ein verstellbarer Hydromotor als Antriebselement eingesetzt, der sich in vorteilhafter Weise mit dem existierenden Hydraulikkreislauf betreiben lässt.

Ein gattungsgemäßer Radantrieb ist aus der DE 299 10 017 U1 bekannt. Der Radantrieb verfügt über eine im fahrzeugnahen Bereich trichterförmig ausgebildete Tragachse, die drehfest am Fahrzeugrahmen befestigt ist. Auf der Tragachse befindet sich eine mittels Wälzlager drehgelagerte Radnabe. Auf der Radnabe ist das Fahrzeugrad befestigbar. Die Radnabe wird ausgehend von einer im Zentrum der Tragachse verlaufenden Antriebswelle über ein die Drehzahl herabsetzendes Planetengetriebe angetrieben. Das Planetengetriebe ist insoweit eingangsseitig über sein zentrales Sonnenrad mit der Antriebswelle verbunden. Abtriebsseitig sind die Planetenräder direkt mit der Radnabe verbunden, die hier den Planetenträger bildet.

Über das äußere Hohlrad des Planetengetriebes wirkt eine dynamische Betriebsbremse für den Radantrieb. Die dynamische Betriebsbremse ist als Lamellenbremse ausgestaltet, deren stehenden Lamellen mit der Radnabe und deren sich bewegenden Lamellen über einen Hohlradträger mit dem Hohlrad des Planetengetriebes in Verbindung stehen. Eine Bremsung während des Betriebes des Randantriebes erfolgt durch eine Druckmittelbeaufschlagung eines Kolbens, der die abwechselnd angeordneten stehenden und sich bewegenden Bremslamellen axial aneinanderpresst, um eine wirkungsvolle Abbremsung des Fahrzeugs zu erzielen.

Die bei der Bremsung entstehende Wärme geht in das Ölbad über und wird über die Radnabe nach außen hin abgeleitet. Wegen der Anordnung der dynamischen Wärmeentwicklung im Bereich der Befestigung des Fahrzeugrades auf. In diesem Bereich ist eine Wärmeableitung nach außen ungünstig, so dass es bei extremer Beanspruchung der Betriebsbremse zu einer Überhitzung des gesamten Radantriebes kommen kann. Weiterhin ist von Nachteil, dass im Wartungs- oder Reparaturfall des Radantriebes eine komplette Demontage des Planetentopfes zu erfolgen hat. Dieses ist nur bei vorher demontiertem Fahrzeugrad möglich

Ein weiterer Radantrieb ist aus der EP 0 684 401 B1 bekannt. Im Gegensatz zu dem vorstehend beschriebenen Radantrieb wird hier als dynamische Betriebsbremse eine Scheibenbremse verwendet. Die Bremsscheibe der Scheibenbremse mit ihren hydraulisch betätigbaren Bremsbacken sind jedoch ebenfalls in der Mitte des Radantriebes angeordnet, so dass die von der Betriebsbremse erzeugte Wärme schlacht nach außen hin abführbar ist. Das Planetengetriebe zur Übertragung der Antriebskraft von der Antriebswelle auf die Radnabe ist auch hier am distalen Ende des Radantriebes platziert. Die dynamische Betriebsbremse sowie das Planetengetriebe sind zu Wartungs- und Reparaturzwecken ebenfalls nur bei abgenommenem Rad und demontierter topfförmiger Gehäusekappe zugängig.

Aus der US 4,496,017 geht ein gattungsgemäßer Radantrieb hervor. Die Betriebsbremse ist hier außenradial auf einem das Endstück der drehfesten Tragachse bildenden hohlzylinderartigen Bremsenträger angeordnet und damit von außer her gut zugänglich. Der Bremsenträger bildet das Endstück des drehbeweglichen Sonnenrades. Die inneren Bremslamellen der Betriebsbremse stehen über dem Bremsenträger mit dem Sonnenrad in Verbindung. Die äußeren Bremslamellen sind dagegen ortsfest gegenüber dem Hohlrad angeordnet. Somit ist der Bremsenträger hier mit dem Sonnenrad drehbar. In Ergebnis dessen bremst die Betriebsbremse des Radantriebes zwischen dem Hohlrad und dem Sonnenrad. Es wird eine relativ große Drehzahl und demgegenüber kleines Drehmoment gebremst. Nachteilig bei dieser Konstruktion ist, dass diese nicht nach dem größtmöglichen Bremsdurchmesser optimiert ist, um ein hohes Bremsmoment zu erzeugen.

Es ist die Aufgabe der vorliegenden Erfindung, den gattungsgemäßen Radantrieb dahingehend weiter zu verbessern, dass eine maximale Bremswirkung erzielbar ist, und die Gefahr einer Überhitzung des Randantriebes bei Betrieb minimiert wird.

Die Aufgabe wird ausgehend von einem Radantrieb gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die dynamische Betriebsbremse eines Radantriebes innerhalb des die Radnabe bildenden Hohlrades stirnseitig direkt hinter einem lösbaren Getriebedeckel und außenradial auf einem das Endstück mit drehfesten Tragachsen bildenden hohlzylinderartigen Bremsenträger angeordnet ist, wobei das Planetengetriebe der Betriebsbremse in Richtung Fahrzeugrahmen folgend innerhalb des Hohlrades angeordnet ist.

Die erfindungsgemäße Anordnung der Brems- und Getriebeteile des Radantriebes wird durch die spezielle Ausgestaltung des Bremsenträges ermöglicht, der eine Verlängerung der drehfesten Tragachse darstellt. Somit gelangt die Betriebsbremse an das distale Ende des Radantriebes. An dieser Stelle besteht durch den Fahrtwind eine verbesserte Wärmeableitung direkt in dem die Bremswärme erzeugenden Bereich des Radantriebes, woraus eine Verbesserungen der Kühlung des Radantriebes resultiert Da der Radantrieb über einen flachen stirnseitigen Getriebedeckel verschlossen ist, ist eine einfache Zugänglichkeit der wesentlichen Bauteile im Wartungs- oder Reparaturfall gewährleistet. Ein Ausbau des Fahrzeugrades ist hierfür nicht erforderlich.

Um eine platzsparende Getriebefunktion des Planetengetriebes innerhalb des Radantriebes sicherzustellen, steht vorzugsweise das antriebsseitige Sonnenrad mit an ortsfest an der Tragachse über Planetenbolzen gehaltenen Planetenrädern in Eingriff. Die Planetenräder rollen sich wiederum auf einer direkt innenradial in das Hohlrad eingebrachten Innenverzahnung ab.

Es kann auch eine weitere Getriebevorstufe innerhalb des Radantriebe vorgesehen werden, um ein gewünschtes Übersetzungsverhältnis beanspruchungsgerecht umzusetzen. Vorzugsweise ist mindestens eine Getriebevorstufe innerhalb des hohlzylinderartigen Bremsenträgers direkt hinter dem lösbaren Getriebedeckel, und damit ebenfalls gut zugänglich, platziert. Die Getriebevorstufe ist eingangsseitig mit der Antriebswelle des Radantriebes verbunden und steht ausgangsseitig mit dem Sonnenrad des insoweit nachgeschalteten (Haupt-)Planetengebiebes in Verbindung. Die Getriebevorstufe kann als ein- oder mehrstufiges Planetenvorgetriebe ausgebildet sein. Die Anordnung als Planetengetriebe ist wegen der koaxialen Bauweise hierfür besonders geeignet. Beispielsweise kann das Hohlrad eines einstufigen Planetenvorgetriebes in einfacher Weise über den Getriebedeckel drehfest gegenüber dem die Radfelge bildenden Hohlrad des (Haupt-)Planetengetriebes ausgebildet sein. Das Hohlrad der Getriebevorstufe trägt insoweit mindestens ein oder zwei Planetenradsätze. Diese Planetenradsätze sind vorzugsweise hinter einer koaxial im Getriebedeckel angeordneten separaten Abdeckung angeordnet, die auch eine Fixierung für die gesamte Antriebswelle des Radantriebes bildet.

Zusätzlich zur Betriebsbremse, die während der Fahrt betätigt wird, kann eingangsseitig an der Antriebswelle auch eine zweite Bremse vorgesehen werden, die die Funktion einer Haltebremse ausübt, also den Stand des Fahrzeugs während des Parkens sicherstellt.

Die dynamische Betriebsbremse wie auch die Haltebremse ist vorzugsweise nach Art einer Lamellenbremse ausgeführt. Im Fall der Betriebsbremse sind die stehenden Bremslamellen mit dem Endstück der drehfesten Tragachse und die drehenden Bremslamellen mit dem Hohlrad verbunden. Beide Arten von Bremslamellen sind abwechselnd paketartig angeordnet. Zur Betätigung der Betriebsbremse ist ein hydraulisch betätigbarer Bremskolben vorgesehen, dessen Druckmittelkanal vorteilafter Weise zumindest teilweise durch die Tragachse in Richtung des Fahrzeugrahmens verläuft. In analoger Weise kann auch der Aufbau sowie die Betätigung der Haltebremse ausgebildet sein. Die Betriebsbremse wird vorzugsweise, durch den Bremskolben gegen die rückstellende Kraft einer Druckfeder betätigt. An Stelle der vorstehend beschriebenen Lamellenbremse ist es auch denkbar, eine anders geartete Bremse - beispielsweise eine Scheibenbremse - als Betriebsbremse und/oder als Haltebremse einzusetzen, falls die hierfür erforderlichen konstruktiven Randbedingungen erfüllt sind.

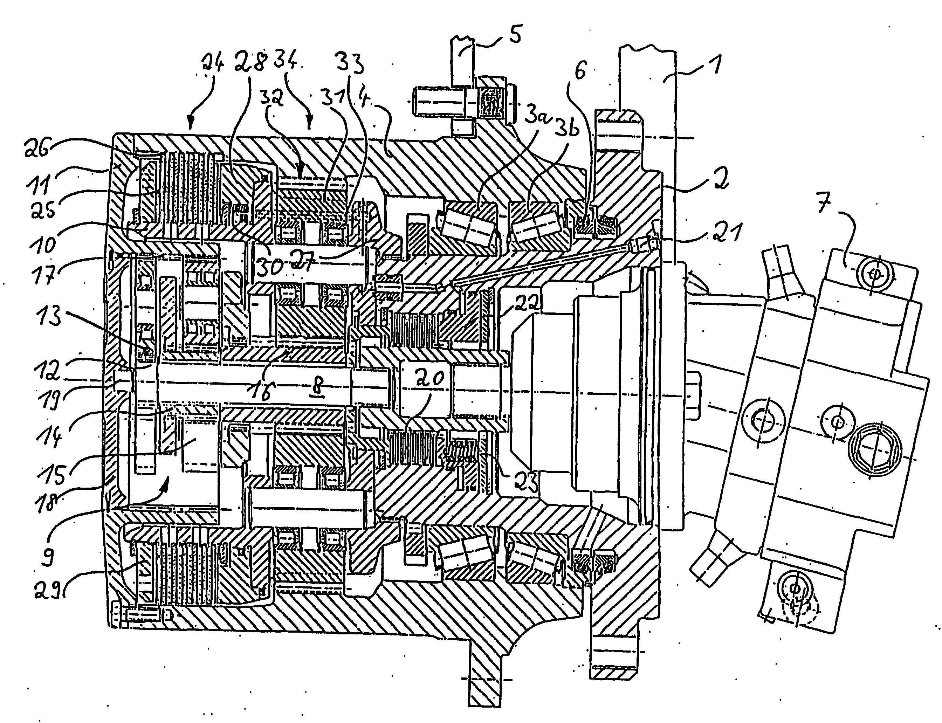

Weitere die Erfindung verbessernde Maßnahmen sind in den abhängigen Ansprüchen angegeben oder werden nachstehend gemeinsam mit der Beschreibung eines bevorzugten Ausführungsbeispiels der Erfindung anhand der Figuren näher dargestellt. Die einzige Figur zeigt einen Axialschnitt eines erfindungsgemäßen Radantriebes.

An einem nicht näher dargestellten Fahrzeugrahmen 1 ist die trichterförmige Tragachse 2 eines Radantriebes durch Verschraubung drehfest angebracht. Über eine Wälzlageranordnung 3a, 3b, die aus zwei Kegelrollenlagem besteht, ist ein Hohlrad 4 drehbar auf der Tragachse 2 gelagert. Das Hohlrad 4 dient direkt als Radnabe für ein hieran anschraubbares Fahrzeugrad 5. Das drehbare Hohlrad 4 ist über eine Dichtungsanordnung 6 gegen die drehfeste Tragachse 2 abgedichtet.

Zum Antrieb des Fahrzeugrades 5 ist ein Hydroverstellmotor 7 vorgesehen, der am Druckmittelkreislauf des Fahrzeuges angeschlossen ist. Über eine koaxiale Antriebswelle 8, die innerhalb der hohlen Tragachse 2 verläuft, wird die vom Hydromotor 7 erzeugte Drehbewegung zunächst einer als Planetengetriebe ausgebildeten Getriebevorstufe 9 zugeleitet. Die Getriebevorstufe 9 ist in diesem Ausführungsbeispiel zweistufig ausgeführt. Die Getriebevorstufe 9 ist innerhalb eines die Fortsetzung der drehfesten Tragachse 2 bildenden höhlzylinderartigen Bremsträgers 10 direkt hinter einem lösbaren Getriebedeckel 11 platziert. Die eingangsseitige Antriebswelle 8 mündet in ein Sonnenrad 12 der ersten Getriebevorstufe. Die mit dem Sonnenrad 12 in Eingriff stehenden Planetenräder 13 sind mit dem Sonnenrad 14 der zweiten Getriebevorstufe verbunden. Deren Planetenräder 15 sind wiederum mit dem Sonnenrad 16 des (Haupt-) Planetengetriebes verbunden. Zum Schließen des Kraftflusses innerhalb der beiden Planetenvorstufen ist ein gemeinsames Hohlrad 17 vorgesehen, das einstückig mit dem Getriebedeckel 11 ausgebildet ist. Die Planetensätze 13 und 15 der beiden Getriebevorstufen sind direkt hinter einer koaxial im Getriebedeckel 11 angeordneten separaten Abdeckung 18 zugängig, die auch eine endseitige Lagerstelle 19 für die Antriebswelle 8 bildet. Im vorderen Bereich der Antriebswelle 8 ist eine Haltebremse 20 vorgesehen, die einer Arretierung des Fahrzeugrades 5 während des Stillstandes des Fahrzeuges sicherstellt. Zu diesem Zweck wirkt die als Lamellenbremse ausgebildete Haltebremse 20 zwischen der Tragachse 2 und der Antriebswelle 8. Eine Betätigung der Haltebremse 20 erfolgt mittels der Kraft einer Bremsfeder 23, wobei die Haltebremse 20 hydraulisch über einen Druckmittelkanal 21 mittels des Kolbens 22 in der Offenstellung gehalten wird.

Neben der Haltebremse 20 ist eine während der Fahrt zum Abbremsen betätigbare dynamische Betriebsbremse 24 vorgesehen. Die dynamische Betriebsbremse 24 ist innerhalb des Hohlrades 4 direkt hinter dem lösbaren Getriebedeckel 11 von außen her zugängig. Stehende Bremslamellen 25 der Betriebsbremse 24 sind mit dem das Endstück der drehfesten Tragachse 2 bildenden Bremsenträger 10 verbunden. Die drehenden Bremslamellen 26 sind dagegen mit dem Hohlrad 4 verbunden. Der Bremsenträger 10 bildet mit einem Planetenträger 27 ein gemeinsames Teil und ist über eine Axialverzahnung drehfest mit der Tragachse 2 verbunden und dort mit einem Sicherungsring axial gehalten. Die Betätigungskraft für die dynamische Betriebsbremse 24 wird von einem Bremskolben 28 aufgebracht, der hydraulisch gegen eine Druckplatte 29 bewegbar ist und über Rückstellfedern 30 seine Ausgangslage einnimmt.

Stirnseitig gesehen hinter der dynamischen Betriebsbremse 24 ist das Planetengetriebe 34, welches das Hauptgetriebe bildet, vorgesehen. Es besteht aus dem Sonnenrad 16, den Planetenrädern 31 sowie einer innenradial am Hohlrad 4 angeordneten Innenverzahnung 32 als Hohlrad. Der Abtrieb des Planetengetriebes 34 erfolgt insoweit über das Hohlrad 4.

Die Erfindung ist nicht beschränkt auf das vorstehend beschriebene bevorzugte Ausführungsbeispiel. Es sind vielmehr auch Abwandlungen hiervon denkbar, die selbst bei grundsätzlich anders gearteter Ausgestaltung von der Erfindung Gebrauch machen. Insbesondere ist die Erfindung nicht beschränkt auf das vorstehend beschriebene zweistufige Vorgetriebe. Es ist auch denkbar, den Radantrieb ohne ein Vorgetriebe oder mit einem nur einstufigen Vorgetriebe auszurüsten. Diese Maßnahme ist allein von dem gewünschten Übersetzungsverhältnis abhängig, welches entsprechend belastungsoptimal auslegbar ist.

### Bezugszeichenliste

- 1: Fahrzeugrahmen
- 2: Tragachse
- 3: Wälzlageranordnung
- 4: Hohlrad
- 5: Fahrzeugrad
- 6: Dichtungsanordnung
- 7: Hydroverstellmotor
- 8: Antriebswelle
- 9: Getriebevorstufe
- 10: Bremsträger
- 11: Getriebedeckel
- 12: Sonnenrad
- 13: Planetenrad
- 14: Sonnenrad
- 15: Planetenrad
- 16: Sonnenrad
- 17: Hohlrad
- 18: Abdeckung
- 19: Lagerstelle
- 20: Haltebremse
- 21: Druckmittelkanal
- 22: Kolben
- 23: Bremsfeder
- 24: Betriebsbremse
- 25: Bremslamelle, stehend
- 26: Bremslamelle, drehend
- 27: Planetenträger
- 28: Kolben
- 29: Druckplatte
- 30: Rückstellfeder
- 31: Planetenrad
- 32: Verzahnung
- 33: Druckmittelkanal
- 34: Planetengetriebe

## Patentansprüche

1. Radantrieb, insbesondere für fahrende Arbeitsmaschinen, mit drehfest am Fahrzeugrahmen (1) angebrachter Tragachse (2), die über eine Wälzlageranordnung (3a, 3b) mit dem Hohlrad (4) als Radnabe drehbar verbunden ist, wobei der Antrieb des Hohlrades (4) über mindestens ein Planetengetriebe (34) mit antriebsseitigem Sonnenrad (16) erfolgt und eine dynamische Betriebsbremse (24) innerhalb des Hohlrades (4) stirnseitig direkt hinter einem lösbaren Getriebedeckel (11) angeordnet ist, wobei ferner das Planetengetriebe (34) stirnseitig gesehen hinter der Betriebsbremse (24) innerhalb des Hohlrades (4) angeordnet ist, **dadurch gekennzeichnet, dass** die Betriebsbremse (24) außenradial auf einem das Endstück der drehfesten Tragachse (2) bildenden hohlzylinderartigen Bremsträger (10) angeordnet ist, so dass die Betriebsbremse (24) zwischen dem Hohlrad (4) und der Tragachse (2) bremst.

2. Radantrieb nach Anspruch 1,
**dadurch gekennzeichnet,**
**daß** das antriebsseitige Sonnenrad (16) des Planetengetriebes (34) mit an ortsfest an der Tragachse (2) über Planetenbolzen gehaltenen Planetenrädern (31) im Eingriff steht, die sich auf einer Innenverzahnung am Hohlrad (4) abrollen.

3. Radantrieb nach Anspruch 1,
**dadurch gekennzeichnet,**
**daß** innerhalb des hohlzylinderartigen Bremsenträgers (10) direkt hinter dem lösbaren Getriebedeckel (11) mindestens eine Getriebevorstufe (9) platziert ist, die eingangsseitig mit der Antriebswelle (8) verbunden ist und die ausgangsseitig mit dem Sonnenrad (16) des Planetengetriebes (34) in Verbindung steht.

4. Radantrieb nach Anspruch 3,
**dadurch gekennzeichnet,**
**daß** die Getriebevorstufe (9) als ein- oder zweistufiges Planetenvorgetriebe ausgebildet ist.

5. Radantrieb nach Anspruch 4,
**dadurch gekennzeichnet,**
**daß** das bzw. ein Hohlrad (17) der Getriebevorstufe (9) über den Getriebedeckel (11) drehfest gegenüber dem die Radnabe bildenden Hohlrad (4) ausgebildet ist.

6. Radantrieb nach Anspruch 4,
**dadurch gekennzeichnet,**
**daß** das Hohlrad (17) der Getriebevorstufe (9) mindestens einen oder zwei Planetenradsätze (13, 15) trägt.

7. Radantrieb nach Anspruch 6,
**dadurch gekennzeichnet,**
**daß** die Planetensätze (13, 15) hinter einer koaxial im Getriebedeckel (11) angeordneten separaten Abdeckung (18) angeordnet sind, die eine Lagerstelle (19) für die Antriebswelle (8) bildet.

8. Radantrieb nach Anspruch 1,
**dadurch gekennzeichnet,**
**daß** auf der eingangsseitigen Antriebswelle (8) eine Haltebremse (20) vorgesehen ist, die mit der hohlen Tragachse (2) in Wirkverbindung steht.

9. Radantrieb nach Anspruch 1,
**dadurch gekennzeichnet,**
**daß** die Betriebsbremse (24) nach Art einer Lamellenbremse mit abwechselnd angeordneten Bremslamellen (25, 26) ausgebildet ist, deren stehende Bremslamellen (25) mit dem Endstück der drehfesten Tragachse (2) und deren drehende Bremslamellen (26) mit dem Hohlrad (4) verbunden sind.

10. Radantrieb nach Anspruch 1,
**dadurch gekennzeichnet,**
**daß** der das Endstück der drehfesten Tragachse (2) bildende hohlzylinderartige Bremsenträger (10) einstückig oder mehrteilig mit der Tragachse (2) ausgebildet ist.

11. Radantrieb nach Anspruch 9,
**dadurch gekennzeichnet,**
**daß** zur Betätigung eines Bremskolbens (28) der Betriebsbremse (24) ein zumindest teilweise durch die Tragachse (2) des Planetengetriebes (34) in Richtung des Fahrzeugrahmens (1) verlaufender Druckmittelkanal (33) vorgesehen ist.

12. Radantrieb nach Anspruch 11,
**dadurch gekennzeichnet,**
**daß** das durch den Druckmittelkanal (33) eingeleitete Druckmittel einen Bremskolben (28) gegen die rückstellende Kraft einer Druckfeder (30) betätigt.

## Claims

1. A wheel drive, in particular for mobile industrial machines, including a supporting axle (2) fixedly mounted on the vehicle chassis (1) and rotatably coupled with the ring gear (4) as a wheel hub via an antifriction bearing arrangement (3a, 3b), wherein the drive of the ring gear (4) is carried out via at least one planetary gear unit (34) having a sun gear (16) on the drive side, and a dynamic driving brake (24) is positioned within the ring gear (4) at its end face directly behind a detachable gearbox cover (11), wherein further the planetary gear unit (34) is arranged within the ring gear (4) behind the driving brake (24) when viewed from the end face, **characterised in that** the driving brake (24) is positioned radially on the outside of a hollow-cylinder type brake carrier (10) forming the end section of the fixed supporting axle (2), so that the driving brake (24) exerts its braking force between the ring gear (4) and the supporting axle (2).

2. The wheel drive according to claim 1,
**characterised in that**
the sun gear (16) on the drive side of the planetary gear unit (34) meshes with planetary gears (31) fixedly held on the supporting axle (2) via planetary-gear bolts and running in mesh with an internal gearing on the ring gear (4).

3. The wheel drive according to claim 1,
**characterised in that**,
within said hollow-cylinder type brake carrier (10), directly behind the detachable gearbox cover (11), at least one gear pre-stage (9) is positioned, which is connected to the drive shaft (8) on the input side and connected to the sun gear (16) of the planetary gear unit (34) on the output side.

4. The wheel drive according to claim 3,
**characterised in that**
said gear pre-stage (9) is configured as a one-stage or a two-stage planetary pre-gear arrangement.

5. The wheel drive according to claim 4,
**characterised in that**
the or a ring gear (17) of the gear pre-stage (9) is configured to be fixed, via the gearbox cover (11), with respect to the ring gear (4) which forms the wheel hub.

6. The wheel drive according to claim 4,
**characterised in that**
said ring gear (17) of said gear pre-stage (9) carries at least one or two planetary gear sets (13, 15).

7. The wheel drive according to claim 6,
**characterised in that**
said planetary gear sets (13, 15) are positioned coaxially within said gearbox cover (11) behind a separate cover (18) forming a bearing point (19) of said drive shaft (8).

8. The wheel drive according to claim 1,
**characterised in that**
a parking brake (20) is provided in effective interaction with the hollow supporting axle (2) on the drive shaft (8) at its input side.

9. The wheel drive according to claim 1,
**characterised in that**
said driving brake (24) is configured in the manner of a multi-disc brake having alternately arranged brake discs (25, 26) and with its fixed brake disks (25) connected to the end section of the fixed supporting axle (2) and its rotating brake discs (26) connected to the ring gear (4).

10. The wheel drive according to claim 1,
**characterised in that**
the hollow-cylinder type brake carrier (10) forming the end section of the fixed supporting axle (2) is configured as one piece, or more than one piece, with the supporting axle (2).

11. The wheel drive according to claim 9,
**characterised in that**,
a pressurized-medium channel (33) extends at least partially through said supporting axle (2) of the planetary gear unit (34) in the direction of the vehicle chassis (1) for operating a brake piston (28) of the driving brake (24).

12. The wheel drive according to claim 11,
**characterised in that**
the pressurized medium fed in through said pressurized-medium channel (33) operates a brake piston (28) against the restoring force of a pressure spring (30).

## Revendications

1. Entraînement de roue, en particulier pour des engins de travail roulants, comportant un essieu porteur (2) agencé solidairement en rotation sur le châssis (1) et relié mobile en rotation à l'engrenage à denture intérieure en tant que moyeu de roue via un agencement de palier à roulement (3a, 3b), l'entraînement de l'engrenagé à denture intérieure (4) s'effectuant via au moins un mécanisme de transmission planétaire (34) comportant un engrenage solaire (16) côté entraînement, et un frein de service dynamique (24) étant agencé à l'intérieur de l'engrenage à denture intérieure (4) du côté frontal directement en arrière d'un couvercle de transmission (11) détachable, le mécanisme de transmission planétaire (34) étant en outre agencé, vu du côté frontal, derrière le frein de servie (24) à l'intérieur de l'engrenage à denture intérieure (4), **caractérisé en ce que** le frein de service (24) est agencé radialement à l'extérieur sur un porte-frein (10) en forme de cylindre creux format l'embout d'extrémité de l'essieu porteur (2) solidaire en rotation, de sorte que le frein de service (24) freine entre l'engrenage à denture intérieure (4) et l'essieu porteur (2).

2. Entraînement de roue selon la revendication 1, **caractérisé en ce que** l'engrenage solaire (16) côté entraînement du mécanisme de transmission planétaire (34) est en engagement avec des engrenages planétaires (31) qui sont maintenus de façon stationnaire sur l'essieu porteur (2) via des goujons planétaires et qui roulent sur une denture intérieure de l'engrenage à denture intérieure (4).

3. Entraînement de roue selon la revendication 1, **caractérisé en ce qu'**à l'intérieur du porte-frein (10) en forme de cylindre creux, directement derrière le couvercle de transmission (11) détachable, il est prévu au moins un étage préliminaire de transmission (9) qui est relié du côté entrée à l'arbre d'entraînement (8) et qui est en liaison du côté sortie avec l'engrenage solaire (16) du mécanisme de transmission planétaire (34).

4. Entraînement de roue selon la revendication 3, **caractérisé en ce que** l'étage préliminaire de transmission (9) est réalisé sous forme de mécanisme de transmission planétaire préliminaire à un ou à deux étages.

5. Entraînement de roue selon la revendication 4, **caractérisé en ce que** le ou un engrenage à denture intérieure (17) de l'étage préliminaire de transmission (9) est réalisé solidairement en rotation par rapport à l'engrenage à denture intérieure (4) formant le moyeu de roue, via le couvercle de transmission (11).

6. Entraînement de roue selon la revendication 4, **caractérisé en ce que** l'engrenage à denture intérieure (17) de l'étage préliminaire de transmission (9) porte au moins un ou deux lots d'engrenages planétaires (13, 15).

7. Entraînement de roue selon la revendication 6, **caractérisé en ce que** les lots d'engrenages planétaires (13, 15) sont agencés derrière un recouvrement séparé (18) qui est agencé coaxialement dans le couvercle de transmission (11) et qui forme un emplacement de montage (19) pour l'arbre d'entraînement (8).

8. Entraînement de roue selon la revendication 1, **caractérisé en ce que** sur l'arbre d'entraînement (8) côté entrée est prévu un frein de stationnement (20) qui est en liaison d'action avec l'essieu porteur creux (2).

9. Entraînement de roue selon la revendication 1, **caractérisé en ce que** le frein de service (24) est réalisé à la manière d'un frein à lamelles comportant des lamelles de freinage (25, 26) agencées en alternance, dont les lamelles de freinage stationnaires (25) sont reliées à l'embout d'extrémité de l'essieu porteur (2) solidaire en rotation et dont les lamelles de freinage tournantes (26) sont reliées à l'engrenage à denture intérieure (4).

10. Entraînement de roue selon la revendication 1, **caractérisé en ce que** le porte-frein (10) en forme de cylindre creux formant l'embout d'extrémité de l'essieu porteur (2) solidaire en rotation est réalisé d'un seul tenant ou en plusieurs parties avec l'essieu porteur (2).

11. Entraînement de roue selon la revendication 9, **caractérisé en ce que** pour actionner un piston de frein (28) du frein de service (24), il est prévu un canal à fluide sous pression (33) s'étendant au moins partiellement à travers l'essieu porteur (2) du mécanisme de transmission planétaire (34) en direction du châssis (1).

12. Entraînement de roue selon la revendication 11, **caractérisé en ce que** le fluide sous pression introduit à travers le canal à fluide sous pression (33) actionne un piston de frein (28) à l'encontre de la force de rappel d'un ressort de compression (30).
